(19) **Europäisches Patentamt**
**European Patent Office**
**Office européen des brevets**

(11) **EP 4 390 445 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **22215113.6**

(22) Anmeldetag: **20.12.2022**

(51) Internationale Patentklassifikation (IPC):
*G01S 7/481* *(2006.01)* *G01S 17/89* *(2020.01)*

(52) Gemeinsame Patentklassifikation (CPC):
**G01S 7/4817; G01S 7/4814; G01S 7/4816;**
G01S 17/89

(54) **VORRICHTUNG ZUM VERMESSEN EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.06.2024 Patentblatt 2024/26**

(73) Patentinhaber: **RIEGL Laser Measurement Systems GmbH**
**3580 Horn (AT)**

(72) Erfinder:
• **RIEGER, Peter**
**3824 Grossau (AT)**
• **PFENNIGBAUER, Martin**
**3430 Tulln (AT)**

(74) Vertreter: **Weiser Voith Gugler**
**Patentanwälte Partnerschaft**
**Kopfgasse 7**
**1130 Wien (AT)**

(56) Entgegenhaltungen:
EP-B1- 3 182 159    US-A1- 2022 043 149
US-B2- 10 067 230

**Beschreibung**

Die vorliegende Erfindung betrifft eine Vorrichtung zum Vermessen einer Umgebung, insbesondere eines Gewässerbodens, durch Laufzeitmessung von daran reflektierten Laserimpulsen. Die Vorrichtung umfasst einen Lasersender zum Aussenden einer Folge von Laserimpulsen als Sende-Laserstrahl, ein um eine Drehachse drehbares pyramiden-, pyramidenstumpf- oder prismenförmiges Spiegelrad, welches im Sende-Laserstrahl angeordnet und dazu ausgebildet ist, bei Drehung um seine Drehachse die Laserimpulse auf in einer Scanlinie liegende Abtastpunkte der Umgebung zu richten, und einen Laserempfänger zum Empfangen der an den Abtastpunkten reflektierten Laserimpulse über das Spiegelrad.

Vorrichtungen dieser Art sind z.B. in EP 3 182 159 B1, US 2022/0043149 A1 und US 10,067,230 B2 beschrieben und werden beispielsweise von einem Luft- oder Wasserfahrzeug mitgeführt, um Umgebungen wie z.B. den Erdboden oder Meeresgrund topographisch zu vermessen. Es ist auch möglich, eine solche Vorrichtung auf einem Landfahrzeug zu montieren, um z.B. Hausfassaden, Straßenschluchten oder Tunnel im Vorbeifahren zu vermessen. Die Vorrichtung kann auch stationär aufgestellt werden, beispielsweise in einem Tag- oder Untertagbergwerk, um dessen Abbau zu vermessen, über einem Förderband, um darauf bewegte Objekte zu vermessen, usw.

Vom Spiegelrad werden dabei die vom Lasersender ausgesendeten Laserimpulse unter verschiedenen Scanrichtungen auf viele Zielpunkte ("Abtastpunkte") in der Umgebung gerichtet, und aus Laufzeitmessungen der an den Abtastpunkten reflektierten Laserimpulse werden die Zielentfernungen und daraus - in Kenntnis der Lage der Vorrichtung und der jeweiligen Aussenderichtung der Laserimpulse - ein Punktemodell ("3D-Punktwolke") der Umgebung erstellt. Der Laserempfänger nutzt dabei zum Empfangen jedes an einem Abtastpunkt reflektierten Laserimpulses dieselbe Spiegelfläche, über welche das Spiegelrad den Laserimpuls des Sende-Laserstrahls auf den Abtastpunkt gerichtet hat.

Eine Spiegelfläche des Spiegelrads nach der anderen richtet dabei die Laserimpulse des Sende-Laserstrahls auf die Abtastpunkte einer Scanlinie. Bei fahrzeuggestütztem Vermessen wird die Vorrichtung meist derart montiert, dass jede Scanlinie schräg oder überhaupt quer zur Fortbewegungsrichtung des Fahrzeugs liegt und jede Spiegelfläche des Spiegelrads infolge der Fahrzeugbewegung eine weitere Scanlinie erzeugt, sodass die Umgebung in zur Fortbewegungsrichtung parallelen Scanstreifen aus schräg oder quer dazu verlaufenden, zueinander parallelen Scanlinien zeilenweise abgetastet wird. Ist die Vorrichtung stationär, wird sie im Allgemeinen geschwenkt oder rundum gedreht, um die umliegende Umgebung zeilenweise abzutasten. Alternativ kann die zu vermessende Umgebung gegenüber der Vorrichtung relativbewegt werden, z.B. zum Vermessen von Gegenständen auf Förderbändern.

Bei beeinträchtigter Sicht, z.B. infolge von Abgasen, Nebel oder stets vorhandener Wassertrübung beim Vermessen eines Gewässerbodens, und/oder bei schwach oder in ungünstigem Winkel reflektierenden Oberflächen der Umgebung können die davon betroffenen Bereiche der Umgebung nur ungenau oder sogar gar nicht vermessen werden: Die an den Abtastpunkten reflektierten, zum Empfänger gelangenden Laserimpulse sind dann so schwach und das Signal-Rauschverhältnis ("signal-to-noise ratio", SNR) des Empfangssignals so schlecht, dass eine Laufzeitmessung erschwert oder überhaupt unmöglich ist. Beispielsweise ist in Gewässern, wo die Sichttiefe (auch "Secchi-Tiefe") mithilfe einer meist in vier Sektoren abwechselnd weiß bzw. schwarz lackierten sogenannten Secchi-Scheibe ermittelt wird und bei guter Wasserqualität z.B. bei etwa 15 m liegt, das Vermessen des Gewässerbodens mit herkömmlichen Vermessungsvorrichtungen auf maximal 1,5 bis 2 Secchi-Tiefen beschränkt. Andererseits stehen einem Erhöhen der Laserimpuls-Spitzenleistung, um das SNR zu erhöhen, Grenzen der Augensicherheit und ebenso technische Grenzen entgegen.

Die Erfindung setzt sich zum Ziel, eine Vorrichtung zum Vermessen einer Umgebung zu schaffen, mit welcher auch beim Vermessen von Gewässerböden bzw. ungünstig refekterenden Oberflächen ein hohes SNR erzielbar ist.

Dieses Ziel wird mit einer Vorrichtung der einleitend genannten Art erreicht, welche sich erfindungsgemäß auszeichnet durch eine zwischen dem Lasersender und dem Spiegelrad angeordnete Ablenkeinrichtung, welche dazu ausgebildet ist, den Sende-Laserstrahl derart auf das Spiegelrad abzulenken, dass zumindest zwei aufeinanderfolgende Laserimpulse der Folge denselben Abtastpunkt treffen.

Die Ablenkeinrichtung ändert somit zwischen den zumindest zwei Laserimpulsen der Folge jeweils die Richtung des Laserstrahls vor dem Spiegelrad geringfügig, sodass in dem Abtastpunkt die zumindest zwei aufeinanderfolgenden Laserimpulse zusammenfallen oder einander zumindest überlappen. Das Empfangssignal des Laserempfängers kann für die Reflexionen dieser Laserimpulse aufsummiert werden, wodurch das SNR erhöht wird. Zwar wird dadurch zugleich die Auflösung beim Vermessen, d.h. die Anzahl der in der Scanlinie nebeneinanderliegenden Abtastpunkte, reduziert, jedoch erhöht sich beim Vermessen eines Gewässerbodens zugleich die erfassbare Tiefe um bis zu 2 oder sogar 3 Secchi-Tiefen je nach Anzahl der auf denselben Abtastpunkt treffenden Laserimpulse bzw. können auch schwach oder in ungünstigem Winkel reflektierende Oberflächen der Umgebung präzise vermessen werden. Die Anzahl der auf denselben Abtastpunkt treffenden Laserimpulse kann dabei nach Erfordernis festgelegt werden.

In einer vorteilhaften Ausführungsform ist die Ablenkeinrichtung zum periodischen Ablenken des Sende-Laserstrahls ausgebildet mit einer Periode, die kleiner oder gleich einem N-tel jener Zeitspanne ist, die das Spiegelrad für eine Scanlinie benötigt, mit N ≥ 2. Somit hat jede Scanlinie N, d.h. zwei oder mehr, Abtastpunkte, die von mehr als einem Laserimpuls getroffen werden und somit mit erhöhtem SNR auswertbar sind.

In einer günstigen Variante dieser Ausführungsform ist die Ablenkeinrichtung dazu ausgebildet, den Sende-Laserstrahl über jede Periode derart auf das Spiegelrad abzulenken, dass lediglich die während eines Teils der Periode ausgesandten Laserimpulse der Folge denselben Abtastpunkt treffen. Im verbleibenden Teil der Periode werden die Laserimpulse je nach Ablenkeinrichtung entweder gar nicht von dieser abgelenkt, sodass alleine das Spiegelrad die Abtastpunkte der Umgebung vorgibt, oder derart abgelenkt, dass sie in größerem gegenseitigen Abstand in der Scanlinie liegen. Jede Scanlinie enthält dadurch neben den N Abtastpunkten, einem pro Periode, die von den zumindest zwei Laserimpulsen getroffen werden und mit erhöhtem SNR auswertbar sind, zusätzlich zwischen diesen liegende (herkömmliche) Abtastpunkte. So können z.B. Untiefen beim Vermessen eines Gewässerbodens mit höherer Auflösung und tiefere Gewässerbereiche dennoch (wenn auch mit geringerer Auflösung) in einem einzigen Messdurchgang erfasst werden.

In einer alternativen Variante ist die Ablenkeinrichtung dazu ausgebildet, den Sende-Laserstrahl über jede Periode derart auf das Spiegelrad abzulenken, dass alle während der Periode ausgesandten Laserimpulse der Folge denselben Abtastpunkt treffen. Jede Scanlinie enthält dadurch genau N Abtastpunkte, einen pro Periode, die allesamt von den zumindest zwei Laserimpulsen getroffen werden, um z.B. tiefere Gewässer zu vermessen. Selbstverständlich könnte die Ablenkeinrichtung optional deaktivierbar sein, um z.B. seichte Gewässer oder günstig reflektierende Oberflächen in hoher Auflösung zu vermessen.

In einer vorteilhaften Ausführungsform weist die Ablenkeinrichtung einen akustooptischen Deflektor auf. Alternativ oder sogar zusätzlich weist die Ablenkeinrichtung einen elektrooptischen Deflektor auf. Akustooptische oder elektrooptische Deflektoren basieren z.B. auf dem Bragg-Effekt bzw. dem Pockels- oder Kerr-Effekt und haben besonders rasch steuerbar veränderliche optische Eigenschaften, sodass das Ablenken des Sende-Laserstrahls besonders rasch veränderlich und präzise steuerbar ist. Derartige Ablenkeinrichtungen sind deshalb auch bei sehr schnell drehenden Spiegelrädern und hoher Impulswiederholrate ("Pulse Repetition Rate", PRR) der Laserimpulse einsetzbar.

In einer besonders kostengünstigen Ausführungsform weist die Ablenkeinrichtung zumindest einen schwenkbaren Spiegel auf. Bevorzugt ist der zumindest eine Spiegel ein MEMS-Spiegel. Ein MEMS-Spiegel ist ein Spiegel eines sogenannten "Micro-Electro-Mechanical-System" (MEMS), d.h. ein elektromechanisch beweglicher Mikrospiegel. Derartige MEMS-Spiegel und Steuerungen dazu, welche beispielsweise aus Videoprojektoren bekannt sind, sind unmittelbar für eine Vielzahl von Anwendungen erhältlich, auch als Array mehrerer einzeln ansteuerbarer Spiegel.

Bevorzugt weist dabei die Ablenkeinrichtung eine Reihe von K um eine Ruhelage schwingbaren Spiegeln und eine optische Weiche zum Umschalten des Sende-Laserstrahls zwischen den Spiegeln auf und ist dazu ausgebildet, die Spiegel mit gleicher Schwingungsdauer und der Reihe nach gegeneinander um ein K-tel der Schwingungsdauer phasenverschoben schwingen zu lassen und die optische Weiche nach jeweils einem K-tel der Schwingungsdauer der Reihe nach zwischen den Spiegeln umzuschalten, mit K ≥ 2. Die Spiegel können so z.B. effizient mit ihrer Resonanzfrequenz schwingen und die optische Weiche den Sende-Laserstrahl im jeweils geeigneten Zeitpunkt zwischen den Spiegeln derart umschalten, dass die von einem Spiegel der Reihe jeweils abgelenkten Laserimpulse denselben Abtastpunkt treffen. Dazu lenkt die optische Weiche den Sende-Laserstrahl z.B. immer auf jenen Spiegel, dessen Schwing-Winkelgeschwindigkeit die Dreh-Winkelgeschwindigkeit des Spiegelrads gerade möglichst genau kompensiert. Als optische Weichen eignen sich z.B. ein oder mehrere akusto- oder elektrooptische Deflektoren und/oder ein oder mehrere Flügelräder bzw. Drehzylinder mit verspiegelten Mantelflächen und Sektoren verschiedener Radien bzw. mit verspiegelten Stirnflächen und Sektoren verschiedener Axiallänge od.dgl.

Um alle der von der Ablenkeinrichtung abgelenkten und an ein und demselben Abtastpunkt reflektierten Laserimpulse über das Spiegelrad zu empfangen, ist besonders einfach, wenn der Laserempfänger ein Gesichtsfeld hat, das einen Scanwinkel einschließt, welcher sich zwischen dem ersten und dem letzten der genannten zumindest zwei aufeinanderfolgenden Laserimpulse der Folge ergeben würde, wenn diese nicht in der genannten Weise von der Ablenkeinrichtung abgelenkt würden.

Vorteilhaft ist, wenn alternativ oder ergänzend der Laserempfänger zum Ausrichten auf die von der Ablenkeinrichtung abgelenkten und an den Abtastpunkten reflektierten Laserimpulse mithilfe eines mit der Ablenkeinrichtung synchronisierten Stellantriebs beweglich ist. Dadurch kann das Gesichtsfeld des Laserempfängers kleiner gehalten werden.

Um einzelne allzu starke Reflexionen z.B. an einer ebenen Oberfläche der Umgebung zu vermeiden, wird beim fahrzeuggestützten Vermessen der Umgebung der Sende-Laserstrahl oftmals nicht gerade nach unten sondern in Fortbewegungsrichtung des Fahrzeugs schräg nach vorne ausgerichtet. Besonders günstig ist, wenn dabei die Scanlinie bogenförmig und die Ablenkeinrichtung dazu ausgebildet ist, den Sende-Laser zweidimensional abzulenken. Dies führt zu gleichmäßigeren Laufzeiten zu allen in der Scanlinie liegenden Abtastpunkten, was das Vermessen vereinfacht. Um eine bogenförmige Scanlinie zu erzeugen, ist beispielsweise die Drehachse des Spiegelrads derart in spitzem Winkel zum Sende-Laserstrahl ausgerichtet, dass der vom Spiegelrad auf die Umgebung gerichtete Sende-Laserstrahl in Normalrichtung auf eine Ebene gesehen, die durch den auf das Spiegelrad treffenden Sende-Laserstrahl und die Drehachse gebildet ist, mit der Drehachse stets einen spitzen Winkel einschließt.

Die Erfindung wird nachstehend anhand von in den beigeschlossenen Zeichnungen dargestellten Ausführungsbeispielen näher erläutert. In den Zeichnungen zeigen:

Fig. 1 eine erfindungsgemäße, an einem Luftfahrzeug montierte Laserscanvorrichtung beim Vermessen einer Umgebung in einer schematischen Perspektivansicht;

Fig. 2 die Vorrichtung von Fig. 1 in einem Blockschaltbild mit schematisch eingezeichneten Strahlverläufen;

die Fig. 3a und 3b das Vermessen einer Umgebung mit einer herkömmlichen Laserscanvorrichtung (Fig. 3a) im Vergleich zum Vermessen der Umgebung mit einer Laserscanvorrichtung gemäß Fig. 1 (Fig. 3b) in einer schematischen Seitenansicht;

Fig. 4 einen Ausschnitt einer Variante der Vorrichtung von Fig. 1 in schematischer Draufsicht;

Fig. 5 eine Ablenkeinrichtung der Vorrichtung von Fig. 1 in einem Blockschaltbild, und

die Fig. 6a bis 6f Varianten eines Ablenkens des Sende-Laserstrahls der Vorrichtung von Fig. 1 in Form eines Drehwinkels ihres Spiegelrads (Fig. 6a), eines Ablenkwinkels ihrer Ablenkeinrichtung (Fig. 6b), einer Überlagerung der beiden Vorgenannten (Fig. 6c), einer möglichen Erzeugung des Ablenkwinkels von Fig. 6b (Fig. 6d), einer Alternative zum Ablenkwinkel von Fig. 6b (Fig. 6e) und eine Überlagerung des alternativen Ablenkwinkels von Fig. 6e mit dem Drehwinkel von Fig. 6a (Fig. 6f) jeweils in einem Diagramm über der Zeit.

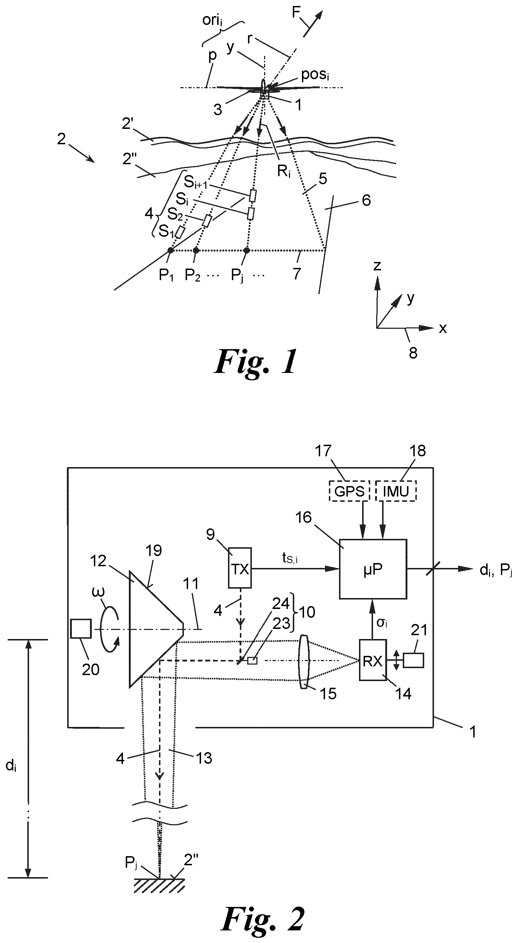

In Fig. 1 ist eine Vorrichtung 1 gezeigt, welche eine Umgebung 2 von einem Fahrzeug (hier: einem Luftfahrzeug) 3 aus vermisst. Die zu vermessende Umgebung 2 kann beispielsweise eine Landschaft sein, aber auch der Straßenboden und die Fassaden entlang eines Straßenzugs, die Innenoberfläche einer Halle, eines Tunnels oder Bergwerks, die Oberfläche 2' oder der Grund 2" eines Gewässers, usw. Bei dem Fahrzeug 3 kann es sich um ein Land-, Luft- oder Wasserfahrzeug handeln, bemannt oder unbemannt. Alternativ könnte die Vorrichtung 1 auch stationär sein und entweder z.B. durch Verschwenken eine ruhende oder eine gegenüber der Vorrichtung 1 relativbewegte Umgebung 2 vermessen, z.B. auf einem Förderband bewegte Werkstücke, etc.

Zum Vermessen tastet die Vorrichtung 1 mithilfe eines gepulsten Sende-Laserstrahls 4 die Umgebung 2 ab. Der Sende-Laserstrahl 4 wird schräg oder quer zur Fortbewegungsrichtung F des Fahrzeugs 3 zu einem Messfächer 5 aufgefächert und mit dem Fahrzeug 3 vorwärtsbewegt, um die Umgebung 2 in zur Fortbewegungsrichtung F parallelen Scanstreifen 6 aus aufeinanderfolgenden Scanlinien 7 (nur eine gezeigt) zeilenweise abzutasten.

Im vorliegenden Beispiel wird naturgemäß der Sende-Laserstrahl 4 an der Gewässeroberfläche 2' gebrochen, bevor er auf den zu vermessenden Gewässerboden 2" trifft; wie diese Brechung beim Vermessen berücksichtigt wird, ist dem Fachmann bekannt.

Aus Laufzeitmessungen an Laserimpulsen $S_1$, $S_2$, ..., allgemein $S_i$, die von der Vorrichtung 1 in Form des Sende-Laserstrahls 4 ausgesandt, jeweils an einem Abtastpunkt $P_1$, $P_2$, ..., allgemein $P_j$, der Umgebung 2 reflektiert und als umgebungsreflektierte Laserimpulse $E_i$ in der Vorrichtung 1 zurückerhalten werden, können Entfernungsmesswerte $d_i$ von der jeweils aktuellen Position $pos_i$ der Vorrichtung 1 zum jeweiligen Abtastpunkt $P_j$ der Umgebung 2 berechnet werden anhand der bekannten Beziehung:

$$d_i = c \cdot (t_{E,i} - t_{S,i}) / 2 = c \cdot \Delta t_i / 2 \tag{1}$$

mit

$t_{s,i}$ ... Sendezeitpunkt des Sende-Laserimpulses $S_i$,
$t_{E,i}$ ... Empfangszeitpunkt des Empfangs-Laserimpulses $E_i$,
$\Delta t_i$ ... Laufzeit des Laserimpulses $S_i$, und
$c$ ... Lichtgeschwindigkeit.

In Kenntnis der jeweiligen Position $pos_i$ der Vorrichtung 1 bei Aussendung des Laserimpulses $S_i$ in einem lokalen oder globalen Koordinatensystem 8 der Umgebung 2, der jeweiligen Orientierung $ori_i$ der Vorrichtung 1 im Koordinatensystem 8, angegeben z.B. durch die Kipp-, Roll- und Gierwinkel des Fahrzeugs 3 um seine Quer-, Längs- und Hochachsen p, r, y, und der jeweiligen Aussenderichtung $R_i$ des Sende-Laserstrahls 4 bezüglich der Vorrichtung 1 bzw. dem Fahrzeug 3 kann dann aus dem jeweiligen Entfernungsmesswert $d_i$ die Position des Abtastpunkts $P_j$ im Koordinatensystem 8 berechnet werden. Eine Vielzahl solcherart vermessener Abtastpunkte $P_j$ bildet die Umgebung 2 in Form einer Abtastpunktwolke im Koordinatensystem 8 ab.

Fig. 2 zeigt Komponenten der Vorrichtung 1 zum Erzeugen der Entfernungsmesswerte $d_i$ im Detail. Die Folge von Laserimpulsen $S_i$ wird von einem Lasersender 9 als Sende-Laserstrahl 4 über eine Ablenkeinrichtung 10 und ein um eine Drehachse 11 drehbares pyramiden-, pyramidenstumpf- oder prismenförmiges Spiegelrad 12 ausgesandt. Die an den

Abtastpunkten $P_j$ reflektierten Laserimpulse $E_i$ werden über das Spiegelrad 12 als Empfangs-Laserstrahl 13 erfasst und in einem Laserempfänger 14 empfangen, dem optional ein Konzentrator 15 vorgelagert ist. Die Sendezeitpunkte $t_{s,i}$ der Laserimpulse $S_i$ und ein Empfangssignal $\sigma_i$ des Laserempfängers 14 zu den umgebungsreflektierten Laserimpulsen $E_i$ werden einem Prozessor 16 zugeführt, welcher optional in der Vorrichtung 1 enthalten ist und aus dem Empfangssignal $\sigma_i$ die Laufzeit $\Delta t_i$ ermittelt. Anhand der Gleichung (1) berechnet der Prozessor 16 daraus die jeweiligen Entfernungen $d_i$ der Abtastpunkte $P_j$.

Wenn die Vorrichtung 1 mobil ist, insbesondere fahrzeuggestützt, verfügt sie optional über eine Positionbestimmungseinrichtung 17 zur Bestimmung ihrer eigenen aktuellen Position $pos_i$ im Koordinatensystem 8, z.B. einen Satellitennavigationsempfänger, und eine Orientierungsbestimmungseinrichtung 18 zur Bestimmung ihrer aktuellen Orientierung (Winkellage) $ori_i$ im Koordinatensystem 8, z.B. eine Trägheitsmesseinrichtung (Inertial Measurement Unit, IMU) oder erhält entsprechende Messwerte der Position $pos_i$ und Orientierung $ori_i$ über Schnittstellen von außerhalb.

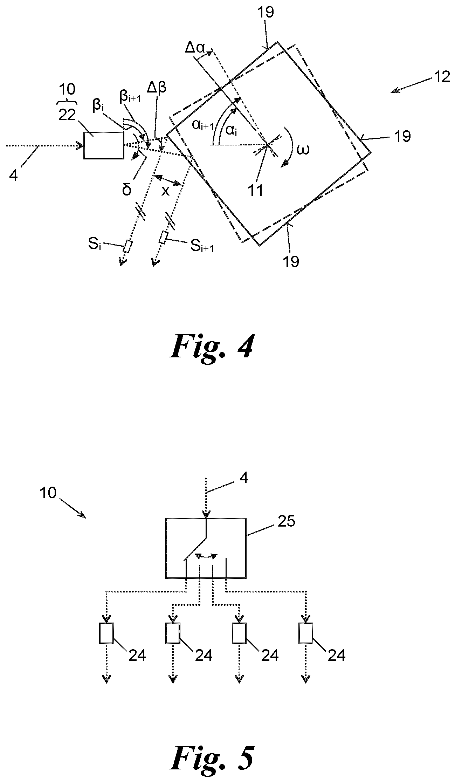

Das Spiegelrad 12 rotiert um die Drehachse 11 mit einer Dreh-Winkelgeschwindigkeit $\omega$, wodurch Spiegel-flächen 19 (Fig. 4) am Mantel des Spiegelrads 12 den Sende-Laserstrahl 4 auffächern und auf die in der Scanlinie 7 liegenden Abtastpunkte $P_j$ richten. Um anhand der aktuellen Stellung des rotierenden Spiegelrads 12 und seiner Spiegelflächen 19 die Aussenderichtung $R_i$ des jeweiligen Laserimpulses $S_i$ zu bestimmen, ist beispielsweise an das Spiegelrad 12 eine Messeinrichtung 20 zum Messen seines aktuellen Drehwinkels $\alpha_i$ angeschlossen.

Die Ablenkeinrichtung 10 ist dazu ausgebildet, den Sende-Laserstrahl 4 vor seinem Auftreffen auf das Spiegelrad 12 abzulenken, um die Dreh-Winkelgeschwindigkeit $\omega$ für zumindest zwei aufeinanderfolgende Laserimpulse $S_i$, $S_{i+1}$, ... der vom Lasersender 9 ausgesandten Folge derart zu kompensieren, dass diese aufeinanderfolgenden Laser-impulse $S_i$, $S_{i+1}$, ... denselben Abtastpunkt $P_j$ treffen, d.h. dass für diese Laserimpulse $S_i$, $S_{i+1}$, ... die zugehörigen Aussenderichtungen $R_i$, $R_{i+1}$, ... zusammenfallen.

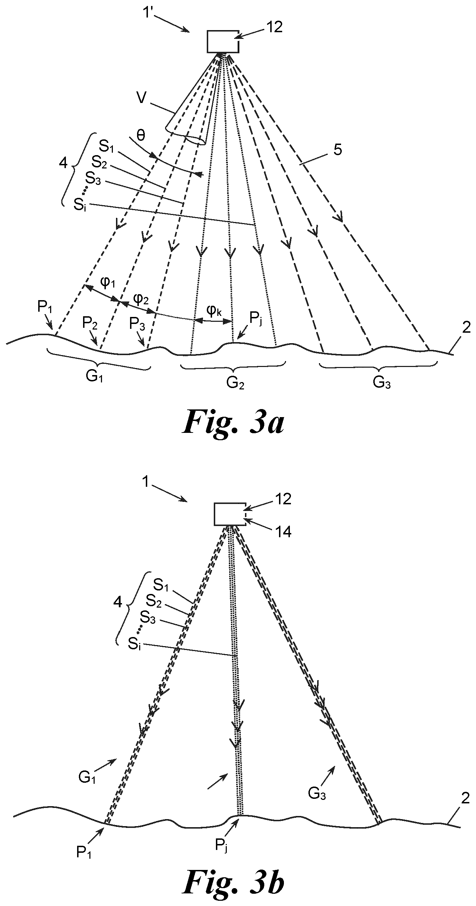

Die Fig. 3a und 3b veranschaulichen anhand eines schematischen Beispiels den Unterschied zwischen einer herkömmlichen Laserscanvorrichtung 1' ohne Ablenkeinrichtung 10 (Fig. 3a) und einer Vorrichtung 1 gemäß der vorliegenden Offenbarung unter Ablenkung der Laserimpulse $S_i$ mithilfe der Ablenkeinrichtung 10 (Fig. 3b). Vergleichbare Merkmale sind dabei mit denselben Bezugszeichen versehen.

Bei der herkömmlichen Laserscanvorrichtung 1' gemäß Fig. 3a wird der Sende-Laserstrahl 4 mithilfe des Spiegelrads zum Messfächer 5 aufgefächert, um die Umgebung 2 abzutasten. Dabei wird infolge der Dreh-Winkelge-schwindigkeit $\omega$ des Spiegelrads 12 jeweils ein - im Allgemeinen über den Messfächer 5 nicht ganz konstanter - Winkel $\varphi_1$, $\varphi_2$, ..., allgemein $\varphi_k$, zwischen zwei aufeinanderfolgenden Laserimpulsen $S_i$ der Folge aufgespannt. Die Vorrichtung 1 der Fig. 1, 2, 3b und 4 - 6 hätte einen solchen Messfächer 5 wie in Fig. 3a, wenn die Laserimpulse $S_i$ der Folge nicht in der hierin offenbarten Weise von der Ablenkeinrichtung 10 abgelenkt würden.

In Fig. 3a sind die Winkel $\varphi_k$ zur Veranschaulichung besonders groß dargestellt; und zur Gegenüberstellung mit Fig. 3b sind die Laserimpulse $S_i$ in Fig. 3a durch verschiedenartige Liniendarstellung in aufeinanderfolgende Gruppen $G_1$, $G_2$, $G_3$, ... unterteilt.

Bei der Vorrichtung 1 gemäß Fig. 3b wird der Sende-Laserstrahl 4 in der hierin offenbarten Weise von der Ablenkeinrichtung 10 abgelenkt, sodass die (hier: drei) in jeder Gruppe $G_1$, $G_2$, $G_3$, ... aufeinanderfolgenden Laserimpulse $S_i$ jeweils denselben Abtastpunkt $P_j$ treffen; jede Gruppe $G_1$, $G_2$, $G_3$, ... von Laserimpulsen $S_i$ trifft dabei einen anderen Abtastpunkt $P_j$.

Der Laserempfänger 14 hat ein Gesichtsfeld V, das jenen Bereich der Umgebung 2 festlegt, der vom Laserempfänger 14 im Augenblick erfasst wird. Da der Laserempfänger 14 die Umgebung 2 und die daran reflektierten Laserimpulse über das Spiegelrad 12 erfasst, ist sein Gesichtsfeld V beweglich.

In einer ersten Ausführungsform schließt das Gesichtsfeld V jenen Scanwinkel $\theta$ ein, welcher sich zwischen dem ersten und dem letzten der aufeinanderfolgenden Laserimpulse $S_i$ einer Gruppe $G_1$, $G_2$, $G_3$, ... ergeben würde, wenn diese nicht in der genannten Weise von der Ablenkeinrichtung 10 abgelenkt würden, wie in Fig. 3a dargestellt ist.

In einer alternativen zweiten Ausführungsform kann das Gesichtsfeld V kleiner sein und der Laserempfänger 14 zum Ausrichten auf die von der Ablenkeinrichtung 10 abgelenkten und an den Abtastpunkten $P_j$ reflektierten Laserimpulse mithilfe eines mit der Ablenkeinrichtung 10 - z.B. über den Prozessor 16 - synchronisierten Stellantriebs 21 (Fig. 2) beweglich und so der Ablenkeinrichtung 10 nachgeführt sein.

Auch eine Kombination dieser beiden Ausführungsformen bzw. eine Mischform, bei welcher das Gesichtsfeld V etwas kleiner ist und der Laserempfänger 14 begrenzt nachgeführt wird, sind möglich.

Im Beispiel der Fig. 4 weist die Ablenkeinrichtung 10 zum Ablenken des Sende-Laserstrahls 4 einen oder mehrere akustooptische und/oder elektrooptische Deflektoren 22 auf, die beispielsweise Vorgaben vom Prozessor 16 erhalten. Akustooptische Deflektoren ("akustooptische Modulatoren" oder "Bragg-Zellen") haben einen transparenten Festkörper, in welchem mit Schallwellen ein optisches Gitter erzeugt wird, an dem der Sende-Laserstrahl 4 gebeugt wird. Ein elektrooptischer Deflektor ("elektrooptischer Modulator"), z.B. eine Kerr- oder eine Pockels-Zelle, verändert sein Brechungsverhalten in Abhängigkeit von einem angelegten elektrischen Feld.

Aus der Dreh-Winkelgeschwindigkeit $\omega$ des (in Fig. 4: prismenförmigen) Spiegelrads 12 und der Impulswiederholrate ("Pulse Repetition Rate", PRR) des Lasersenders 9 lässt sich die Differenz $\Delta\alpha$ der Drehwinkel $\alpha_i$, $\alpha_{i+1}$ zu den

Sendezeitpunkten $t_{s,i}$, $t_{s,i+1}$ zweier aufeinanderfolgender Laserimpulse $S_i$, $S_{i+1}$ der Folge gemäß $\Delta\alpha = \alpha_{i+1} - \alpha_i$ ermitteln. Die zur Kompensation der Dreh-Winkelgeschwindigkeit $\omega$ erforderliche Differenz $\Delta\beta$ der Ablenkwinkel $\beta_i$, $\beta_{i+1}$ der Ablenkeinrichtung 10 zu den aufeinanderfolgenden Sendezeitpunkten $t_{s,i}$, $t_{s,i+1}$ ist abhängig von der Bauform des Spiegelrads 12 (pyramiden-, pyramidenstumpf- oder prismenförmig), der Ausrichtung der Spiegelflächen 19 und der Lage der Drehachse 11 des Spiegelrads 12 gegenüber dem Sende-Laserstrahl 4. Im Allgemeinen ist diese Differenz $\Delta\beta$ der Ablenkwinkel $\beta_i$, $\beta_{i+1}$ der Ablenkeinrichtung 10 auch bei konstanter Dreh-Winkelgeschwindigkeit $\omega$ des Spiegelrads 12 nicht konstant. Im Beispiel der Fig. 4 mit dem prismenförmigen Spiegelrad 12 und dem zu dessen Drehachse 11 etwa normal ausgerichteten Lasersender 9 beträgt die zur Kompensation der Dreh-Winkelgeschwindigkeit $\omega$ erforderliche Differenz $\Delta\beta$ etwa das Doppelte der Differenz $\Delta\alpha$, damit die zumindest zwei aufeinanderfolgenden Laserimpulse $S_i$, $S_{i+1}$, ... denselben Abtastpunkt $P_j$ der Umgebung 2 treffen. Dies kann z.B. dadurch erzielt werden, dass die Ablenk-Winkelgeschwindigkeit $\delta$ der Ablenkeinrichtung 10 etwa dem Doppelten der Dreh-Winkelgeschwindigkeit $\omega$ des Spiegelrads 12 gewählt wird.

Die Aussenderichtungen $R_i$, $R_{i+1}$ zweier aufeinanderfolgender, am Spiegelrad 12 reflektierter Laserimpulse $S_i$, $S_{i+1}$ sind in der Folge zueinander parallel und haben einen geringfügigen (in Fig. 4 zur besseren Sichtbarkeit übergroß dargestellten) gegenseitigen Abstand x; da die Baugröße des Spiegelrads 12 wesentlich geringer als die Entfernung $d_i$ der Vorrichtung 1 von der Umgebung 2 und als die unvermeidliche Aufweitung des Sende-Laserstrahls 4 bis zum Auftreffpunkt $P_j$ ist, ist der genannte Abstand x beim Auftreffen der Laserimpulse $S_i$, $S_{i+1}$ auf den Auftreffpunkt $P_j$ vernachlässigbar. Falls erforderlich, könnte der Abstand x überdies durch eine entsprechend korrigierte Ablenk-Winkelgeschwindigkeit $\delta$ kompensiert werden.

Der Prozessor 16 kann durch Aufsummieren der Empfangssignale $\sigma_i$, $\sigma_{i+1}$, ... der an ein und demselben Auftreffpunkt $P_j$ reflektierten Laserimpulse $E_i$, $E_{i+1}$, ... deren Empfangszeitpunkte $t_{E,i}$, $t_{E,i+1}$, ... mit verbessertem Signal-Rauschverhältnis (signal-to-noise ratio, SNR) bestimmen. Es versteht sich, dass zur weiteren Verbesserung des SNR eine Vielzahl, z.B. 10, 100, 1000 oder mehr aufeinanderfolgende Laserimpulse $S_i$ des Lasersenders 9 von der Ablenkeinrichtung 10 zum Auftreffen auf denselben Abtastpunkt $P_j$ auf das Spiegelrad 12 abgelenkt werden können. Entsprechend geringer ist innerhalb einer Scanline 7 die Anzahl der Abtastpunkte $P_j$ im Vergleich zu den Laserimpulsen $S_i$.

Alternativ oder zusätzlich zu dem/den akusto- bzw. elektrooptischen Deflektor/en 22 kann die Ablenkeinrichtung 10 zum Ablenken des Sende-Laserstrahls 4 einen oder mehrere z.B. mithilfe eines Aktors 23 schwenkbare Spiegel 24, insbesondere MEMS-Spiegel, aufweisen. Der Aktor 23 bzw. die MEMS-Spiegel werden optional nach Vorgaben des Prozessors 16 gesteuert.

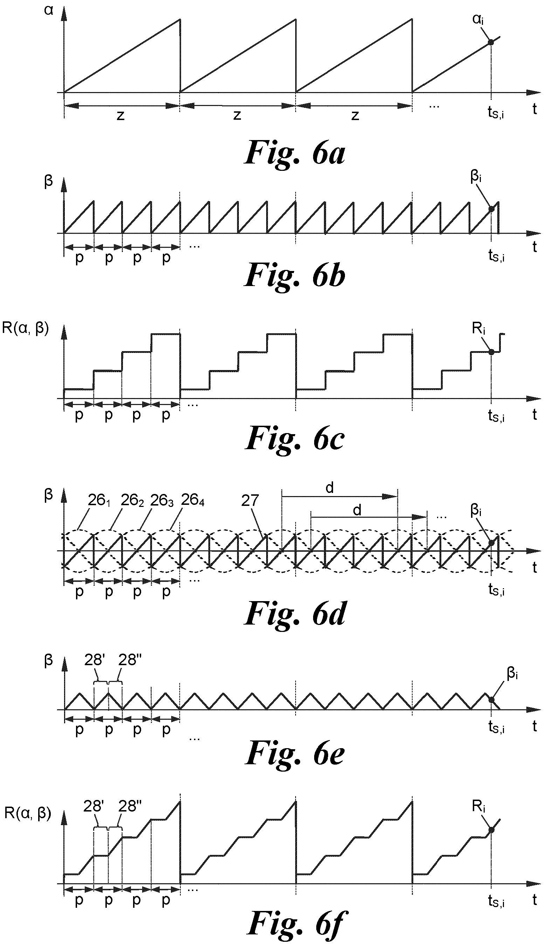

In der Ausführungsform der Fig. 5 weist die Ablenkeinrichtung 10 eine Reihe von K (hier: vier) um eine Ruhelage mit hoher Frequenz, z.B. resonant, schwingenden Spiegeln 24 - z.B. MEMS-Spiegeln - und eine optische Weiche 25 auf. Die optische Weiche 25 ist beispielsweise durch einen oder mehrere akusto- oder elektrooptische Deflektoren, ein oder mehrere Flügelräder, einen oder mehrere Drehzylinder mit verspiegelten Mantelflächen und Sektoren verschiedener Radien bzw. mit verspiegelten Stirnflächen und Sektoren verschiedener Axiallänge od.dgl. gebildet. Wie in Bezug auf Fig. 6d weiter unten näher erläutert wird, lässt eine Steuerung in der Ablenkeinrichtung 10 die Spiegel 24 gegeneinander phasenverschoben schwingen, wobei die optische Weiche 25 den Sende-Laserstrahl 4 zwischen den Spiegeln 24 umschaltet.

In der Ausführungsform der Fig. 6a bis 6f lenkt das Spiegelrad 12 den Sende-Laserstrahl 4 sägezahnförmig mit einer periodischen Zeitspanne z ab. Im Detail zeigt Fig. 6a den Zeitverlauf des Drehwinkels $\alpha$ modulo $2\pi/M$ des Spiegelrads 12, wobei M die Anzahl der Spiegelflächen 19 bezeichnet. Zu den Sendezeitpunkten $t_{s,i}$ nimmt der Drehwinkel $\alpha$ jeweils die diskreten Drehwinkel $\alpha_i$ ein. Jede Spiegelfläche 19 des Spiegelrads 12 wird also für eine Zeitspanne z vom Sende-Laserstrahl 4 getroffen, bevor dieser aufgrund der Dreh-Winkelgeschwindigkeit $\omega$ des Spiegelrads 12 die jeweils folgende Spiegelfläche 19 trifft. Da jede Spiegelfläche 19 beim Rotieren des Spiegelrads 12 einen eigenen Messfächer 5 bildet und jeder Messfächer 5 eine Scanlinie 7 erzeugt, entspricht die Zeitspanne z jener Dauer, die das Spiegelrad 12 für eine Scanlinie 7 benötigt.

Gemäß Fig. 6b lenkt die Ablenkeinrichtung 10 den Sende-Laserstrahl 4 sägezahnförmig mit einer Periode p ab. Die Periode p ist kleiner oder gleich einem N-tel der Zeitspanne z, mit $N \geq 2$. Während der Zeitspanne z gibt es damit zumindest zwei (im Beispiel der Fig. 6b: vier) Perioden p.

In der Variante der Fig. 6b lenkt die Ablenkeinrichtung 10 den Sende-Laserstrahl 4 über jede Periode p derart auf das Spiegelrad 12 ab, dass alle während dieser Periode p ausgesandten Laserimpulse $S_i$ der Folge denselben Abtastpunkt $P_j$ treffen. Die während einer anderen Periode p ausgesandten Laserimpulse $S_i$ der Folge treffen im Allgemeinen jeweils einen anderen Abtastpunkt $P_j$. In der beispielhaften Variante des Spiegelrads 12 gemäß Fig. 4 entspricht daher die Ablenk-Winkelgeschwindigkeit $\delta$ während der gesamten Periode p etwa der doppelten Dreh-Winkelgeschwindigkeit $\omega$ des Spiegelrads 12. Daraus resultiert ein sägezahnförmiger Zeitverlauf des Ablenkwinkels $\beta$ mit periodischen Sägezähnen der Periode p, welcher zu den Sendezeitpunkten $t_{s,i}$ die diskreten Ablenkwinkel $\beta_i$ einnimmt.

In anderen Varianten der Vorrichtung 1 ist die Ablenk-Winkelgeschwindigkeit $\delta$ größer oder kleiner als die doppelte Dreh-Winkelgeschwindigkeit $\omega$ und ist dabei nicht in jedem Fall über die gesamte Periode p proportional zur Dreh-Winkelgeschwindigkeit $\omega$, sodass der Zeitverlauf des Ablenkwinkels $\beta$ nur näherungsweise sägezahnförmig ist.

Gemäß Fig. 6c ergibt sich aus der Kombination des sägezahnförmigen Zeitverlaufs des Drehwinkels $\alpha$ des Spiegelrads 12 modulo $2\pi/M$ (Fig. 6a) mit dem (näherungsweise) sägezahnförmigen Zeitverlauf des Ablenkwinkels $\beta$ der Ablenkeinrichtung 10 (Fig. 6b) ein stufenförmiger Verlauf der Aussenderichtungen $R_i$ der Laserimpulse $S_i$. Die Sende-Laserimpulse $S_i$ springen damit in Intervallen mit der Periode p von einem Abtastpunkt $P_j$ zum nächsten.

Der Zeitverlauf des Ablenkwinkels $\beta$ lässt sich z.B. mit akusto- oder elektrooptischen Deflektoren 22 oder, wenn die Dreh-Winkelgeschwindigkeit $\omega$ nicht zu hoch ist, mit einem entsprechend angesteuerten MEMS-Spiegel erzielen.

Im Beispiel der Fig. 6d wird der (näherungsweise) sägezahnförmige Zeitverlauf des Ablenkwinkels $\beta$ durch das Zusammenwirken von K (hier: vier) sinusförmig, insbesondere resonant, schwingenden Spiegeln 24 und einer optischen Weiche 25 gemäß Fig. 5 erzielt. Die Spiegel 24 schwingen mit gleicher Schwingungsdauer d, jedoch der Reihe nach gegeneinander um ein K-tel (hier: 1/4) ihrer Schwindungsdauer d phasenverschoben, wie durch die vier strichliert gezeichneten Sinus-Schwingungen $26_1$, $26_2$, $26_3$, $26_4$ versinnbildlicht. Die optische Weiche 25 schaltet nach jeweils einem K-tel der Schwingungsdauer d der Reihe nach zwischen den K Spiegeln 24 um, u.zw. derart, dass von jedem Spiegel 24 nur jene Sinus-Abschnitte verwendet werden, bei welchen die Schwenk-Winkelgeschwindigkeit des Spiegels 24 als quasi-linear betrachtet werden kann und etwa gleich der Dreh-Winkelgeschwindigkeit $\omega$ des Spiegelrads 12 ist. In Fig. 6d sind diese Sinus-Abschnitte durch die durchgezogene (sägezahnförmige) Linie 27 markiert.

In einer alternativen, in Fig. 6e gezeigten Ausführungsform lenkt die Ablenkeinrichtung 10 den Sende-Laserstrahl 4 nicht über die gesamte Periode p, sondern nur über einen Teil 28' (hier: die Hälfte) jeder Periode p derart auf das Spiegelrad 12 ab, dass lediglich die während dieses Teils 28' der Periode p ausgesandten Laserimpulse $S_i$ der Folge denselben Abtastpunkt $P_j$ treffen. In der beispielhaften Variante des Spiegelrads 12 gemäß Fig. 4 entspricht somit während dieses Teils 28' der Periode p die Ablenk-Winkelgeschwindigkeit $\delta$ etwa der doppelten Dreh-Winkelgeschwindigkeit $\omega$ des Spiegelrads 12. Im verbleibenden Teil 28" jeder Periode p ist die Ablenk-Winkelgeschwindigkeit $\delta$ z.B. etwa gleich groß jedoch entgegengesetzt gerichtet, sodass sich ein dreieckförmiger Zeitverlauf des Ablenkwinkels $\beta$ ergibt und die während dieses verbleibenden Teils 28" der Periode p ausgesandten Laserimpulse $S_i$ der Folge jeweils andere Abtastpunkte $P_j$ treffen. Die während einer anderen Periode p ausgesandten Laserimpulse $S_i$ der Folge treffen im Allgemeinen andere Abtastpunkte $P_j$.

Fig. 6f zeigt zu diesem Beispiel die resultierende Überlagerung mit dem Drehwinkel $\alpha$ gemäß Fig. 6a: Über den genannten einen Teil 28' jeder Periode p ist der Zeitverlauf unverändert (horizontal), sodass alle währenddessen ausgesandten Laserimpulse $S_i$ dieselbe Aussenderichtung $R_i$ haben und somit denselben Abtastpunkt $P_j$ treffen. Im verbleibenden Teil 28" jeder Periode p ist die Steigung der resultierenden Überlagerung größer (hier: etwa verdoppelt); die Aussenderichtungen $R_i$ ändern sich in diesen Teilen 28" somit (in diesem Beispiel) doppelt so schnell wie ohne Ablenkeinrichtung 10.

Es versteht sich, dass der Ablenkwinkel $\beta$ auch andere als sägezahn- bzw. dreieckförmige Zeitverläufe haben kann, solange die während des genannten einen Teils 28' jeder Periode p ausgesandten Laserimpulse ($S_i$) der Folge denselben Abtastpunkt ($P_j$) treffen.

Anstelle der in Fig. 1 dargestellten geraden Scanlinie 7 könnte diese bogenförmig sein. Das wird beispielsweise erzielt, indem die Drehachse 11 des Spiegelrads 12 in spitzem Winkel zum Sende-Laserstrahl 4 ausgerichtet ist, z.B. wenn der vom Spiegelrad 12 auf die Umgebung 2 gerichtete Sende-Laserstrahl 4 - in Normalrichtung auf eine Ebene gesehen, die durch den auf das Spiegelrad 12 treffenden Sende-Laserstrahl 4 und die Drehachse 11 gebildet ist - mit der Drehachse 11 stets einen spitzen Winkel einschließt. Bei einer solchen bogenförmigen Scanlinie 7 lenkt die Ablenkeinrichtung 10 optional den Sende-Laserstrahl 4 zweidimensional ab, damit zumindest zwei aufeinanderfolgende Laserimpulse $S_i$, $S_{i+1}$, ... der Folge auf denselben Abtastpunkt $P_j$ treffen und nicht etwa schräg oder quer zur Scanlinie gegeneinander versetzt sind.

Die Erfindung ist nicht auf die dargestellten Ausführungsformen beschränkt, sondern umfasst alle Varianten, Modifikationen und deren Kombinationen, die in den Rahmen der angeschlossen Ansprüche fallen.

**Patentansprüche**

**1.** Vorrichtung zum Vermessen einer Umgebung (2), insbesondere eines Gewässerbodens (2"), durch Laufzeitmessung von daran reflektierten Laserimpulsen, umfassend:

einen Lasersender (9) zum Aussenden einer Folge von Laserimpulsen ($S_i$) als Sende-Laserstrahl (4),
ein um eine Drehachse (11) drehbares pyramiden-, pyramidenstumpf- oder prismenförmiges Spiegelrad (12), welches im Sende-Laserstrahl (4) angeordnet und dazu ausgebildet ist, bei Drehung um seine Drehachse (11) die Laserimpulse ($S_i$) auf in einer Scanlinie (7) liegende Abtastpunkte ($P_j$) der Umgebung (2) zu richten, und
einen Laserempfänger (14) zum Empfangen der an den Abtastpunkten ($P_j$) reflektierten Laserimpulse über das Spiegelrad (12),
**gekennzeichnet durch** eine zwischen dem Lasersender (9) und dem Spiegelrad (12) angeordnete Ablenkeinrichtung (10), welche dazu ausgebildet ist, den Sende-Laserstrahl (4) derart auf das Spiegelrad (12) abzulenken, dass zumindest zwei aufeinanderfolgende Laserimpulse ($S_i$, $S_{i+1}$) der Folge denselben Abtastpunkt ($P_j$) treffen.

2. Vorrichtung nach Anspruch 1, **dadurch gekennzeichnet, dass** die Ablenkeinrichtung (10) zum periodischen Ablenken des Sende-Laserstrahls (4) ausgebildet ist mit einer Periode (p), die kleiner oder gleich einem N-tel jener Zeitspanne (z) ist, die das Spiegelrad (12) für eine Scanlinie (7) benötigt, mit $N \geq 2$.

3. Vorrichtung nach Anspruch 2, **dadurch gekennzeichnet, dass** die Ablenkeinrichtung (10) dazu ausgebildet ist, den Sende-Laserstrahl (4) über jede Periode (p) derart auf das Spiegelrad (12) abzulenken, dass lediglich die während eines Teils (28') der Periode (p) ausgesandten Laserimpulse ($S_i$) der Folge denselben Abtastpunkt ($P_j$) treffen.

4. Vorrichtung nach Anspruch 2, **dadurch gekennzeichnet, dass** die Ablenkeinrichtung (10) dazu ausgebildet ist, den Sende-Laserstrahl (4) über jede Periode (p) derart auf das Spiegelrad (12) abzulenken, dass alle während der Periode (p) ausgesandten Laserimpulse ($S_i$) der Folge denselben Abtastpunkt ($P_j$) treffen.

5. Vorrichtung nach einem der Ansprüche 1 bis 4, **dadurch gekennzeichnet, dass** die Ablenkeinrichtung (10) einen akustooptischen Deflektor aufweist.

6. Vorrichtung nach einem der Ansprüche 1 bis 5, **dadurch gekennzeichnet, dass** die Ablenkeinrichtung (10) einen elektrooptischen Deflektor aufweist.

7. Vorrichtung nach einem der Ansprüche 1 bis 6, **dadurch gekennzeichnet, dass** die Ablenkeinrichtung (10) zumindest einen schwenkbaren Spiegel (24) aufweist.

8. Vorrichtung nach Anspruch 7, **dadurch gekennzeichnet, dass** der zumindest eine Spiegel (24) ein MEMS-Spiegel ist.

9. Vorrichtung nach Anspruch 7 oder 8, **dadurch gekennzeichnet, dass** die Ablenkeinrichtung (10) eine Reihe von K um eine Ruhelage schwingbaren Spiegeln (24) und eine optische Weiche (25) zum Umschalten des Sende-Laserstrahls (4) zwischen den Spiegeln (24) aufweist und dazu ausgebildet ist, die Spiegel (24) mit gleicher Schwingungsdauer (d) und der Reihe nach gegeneinander um ein K-tel der Schwingungsdauer (d) phasenverschoben schwingen zu lassen und die optische Weiche (25) nach jeweils einem K-tel der Schwingungsdauer (d) der Reihe nach zwischen den Spiegeln (24) umzuschalten, mit $K \geq 2$.

10. Vorrichtung nach einem der Ansprüche 1 bis 9, **dadurch gekennzeichnet, dass** der Laserempfänger (14) ein Gesichtsfeld (V) hat, das einen Scanwinkel ($\theta$) einschließt, welcher sich zwischen dem ersten und dem letzten der genannten zumindest zwei aufeinanderfolgenden Laserimpulse ($S_i$) der Folge ergeben würde, wenn diese nicht in der genannten Weise von der Ablenkeinrichtung (10) abgelenkt würden.

11. Vorrichtung nach einem der Ansprüche 1 bis 10, **dadurch gekennzeichnet, dass** der Laserempfänger (14) zum Ausrichten auf die von der Ablenkeinrichtung (10) abgelenkten und an den Abtastpunkten ($P_j$) reflektierten Laserimpulse mithilfe eines mit der Ablenkeinrichtung (10) synchronisierten Stellantriebs (21) beweglich ist.

12. Vorrichtung nach einem der Ansprüche 1 bis 11, **dadurch gekennzeichnet, dass** die Scanlinie (7) bogenförmig und die Ablenkeinrichtung (10) dazu ausgebildet ist, den Sende-Laserstrahl (4) zweidimensional abzulenken.

**Claims**

1. A device for measuring an environment (2), in particular a bottom of a body of water (2"), by time-of-flight measurement of laser pulses reflected therefrom, comprising:

   a laser transmitter (9) for transmitting a sequence of laser pulses ($S_i$) as a transmission laser beam (4),
   a pyramid-shaped, truncated pyramid-shaped or prism-shaped mirror wheel (12) rotatable about an axis of rotation (11), which is arranged in the transmission laser beam (4) and is configured, upon rotation about its axis of rotation (11), to direct the laser pulses ($S_i$) onto scanning points ($P_j$) of the environment (2) which lie in a scanning line (7), and
   a laser receiver (14) for receiving the laser pulses reflected at the scanning points ($P_j$) via the mirror wheel (12),

8

**characterised by** a deflection device (10) arranged between the laser transmitter (9) and the mirror wheel (12), which is configured to deflect the transmission laser beam (4) onto the mirror wheel (12) such that at least two consecutive laser pulses ($S_i$, $S_{i+1}$) of the sequence hit the same scanning point ($P_j$).

2. The device according to claim 1, **characterised in that** the deflection device (10) is configured to periodically deflect the transmission laser beam (4) with a period (p) which is less than or equal to an N-th of that time period (z) which the mirror wheel (12) requires for one scanning line (7), with $N \geq 2$.

3. The device according to claim 2, **characterised in that** the deflection device (10) is configured to deflect the transmission laser beam (4) onto the mirror wheel (12) over each period (p) such that only the laser pulses ($S_i$) of the sequence which are transmitted during a part (28') of the period (p) hit the same scanning point ($P_j$).

4. The device according to claim 2, **characterised in that** the deflection device (10) is configured to deflect the transmission laser beam (4) onto the mirror wheel (12) over each period (p) such that all the laser pulses ($S_i$) of the sequence which are transmitted during the period (p) hit the same scanning point ($P_j$).

5. The device according to any one of claims 1 to 4, **characterised in that** the deflection device (10) comprises an acousto-optical deflector.

6. The device according to any one of claims 1 to 5, **characterised in that** the deflection device (10) comprises an electro-optical deflector.

7. The device according to any one of claims 1 to 6, **characterised in that** the deflection device (10) comprises at least one pivotable mirror (24).

8. The device according to claim 7, **characterised in that** the at least one mirror (24) is a MEMS mirror.

9. The device according to claim 7 or 8, **characterised in that** the deflection device (10) comprises a series of K mirrors (24), which can oscillate about a resting position, and an optical switch (25) for switching the transmission laser beam (4) between the mirrors (24), and is configured to let the mirrors (24) oscillate with the same oscillation duration (d) and, in the order of the series, with a phase shift of one K-th of the oscillation duration (d) relative to one another, and to switch the optical switch (25) between the mirrors (24) in the order of the series after respectively one K-th of the oscillation duration (d), with $K \geq 2$.

10. The device according to any one of claims 1 to 9, **characterised in that** the laser receiver (14) has a field of view (V) which encloses a scanning angle ($\theta$) which would result between the first and the last of said at least two consecutive laser pulses ($S_i$) of the sequence had they not been deflected in said manner by the deflection device (10).

11. The device according to any one of claims 1 to 10, **characterised in that** the laser receiver (14) can be moved for aligning with the laser pulses deflected by the deflection device (10) and reflected at the scanning points ($P_j$) by means of an actuating drive (21) synchronised with the deflection device (10).

12. The device according to any one of claims 1 to 11, **characterised in that** the scanning line (7) is arcuate and the deflection device (10) is configured to deflect the transmission laser beam (4) two-dimensionally.

**Revendications**

1. Dispositif de mesure d'un environnement (2), notamment d'un fond de plan d'eau (2") par mesure de temps de vol d'impulsions laser s'y réfléchissant, comprenant :

   un émetteur laser (9) pour l'émission d'une séquence d'impulsions laser ($S_i$) en tant que faisceau laser d'émission (4),
   une roue miroir (12) en forme de pyramide, de pyramide tronquée ou de prisme rotative autour d'un axe de rotation (11), laquelle est disposée dans le faisceau laser d'émission (4) et est conçue, lors de la rotation autour de son axe de rotation (11), pour diriger les impulsions laser ($S_i$) sur des points de balayage ($P_j$) de l'environnement (2) se situant dans une ligne de balayage (7), et
   un récepteur laser (14) pour la réception d'impulsions laser réfléchies sur les points de balayage ($P_j$) par le biais

de la roue miroir (12),
**caractérisé par** un dispositif de déviation (10) disposé entre l'émetteur laser (9) et la roue miroir (12), lequel est conçu pour dévier le faisceau laser d'émission (4) vers la roue miroir (12) de telle manière qu'au moins deux impulsions laser ($S_i$, $S_{i+1}$) successives de la séquence frappent le même point de balayage ($P_j$).

2. Dispositif selon la revendication 1, **caractérisé en ce que** le dispositif de déviation (10) est conçu pour la déviation périodique du faisceau laser d'émission (4) avec une période (p) qui est inférieure ou égale à un $N^{ième}$ de celui intervalle de temps (z) que la roue miroir (12) prend pour une ligne de balayage (7), avec $N \geq 2$.

3. Dispositif selon la revendication 2, **caractérisé en ce que** le dispositif de déviation (10) est conçu pour dévier le faisceau laser d'émission (4) sur chaque période (p) vers la roue miroir (12) de telle manière que seulement les impulsions lasers ($S_i$) de la séquence émises pendant une partie (28') de la période (p) frappent le même point de balayage ($P_j$).

4. Dispositif selon la revendication 2, **caractérisé en ce que** le dispositif de déviation (10) est conçu pour dévier le faisceau laser d'émission (4) sur chaque période (p) vers la roue miroir (12) de telle manière que toutes les impulsions lasers ($S_i$) de la séquence émises pendant la période (p) frappent le même point de balayage ($P_j$).

5. Dispositif selon l'une des revendications 1 à 4, **caractérisé en ce que** le dispositif de déviation (10) présente un déflecteur acousto-optique.

6. Dispositif selon l'une des revendications 1 à 5, **caractérisé en ce que** le dispositif de déviation (10) présente un déflecteur électro-optique.

7. Dispositif selon l'une des revendications 1 à 6, **caractérisé en ce que** le dispositif de déviation (10) présente au moins un miroir (24) pivotable.

8. Dispositif selon la revendication 7, **caractérisé en ce que** l'au moins un miroir (24) est un miroir MEMS.

9. Dispositif selon la revendication 7 ou 8, **caractérisé en ce que** le dispositif de déviation (10) présente une série de K miroirs (24) pouvant osciller autour d'une position de repos et un commutateur (25) optique pour la commutation du faisceau laser d'émission (4) entre les miroirs (24), et est conçu pour laisser osciller les miroirs (24) avec la même période d'oscillation (d) et dans l'ordre de la série avec un décalage de phase d'un $K^{ième}$ de la période d'oscillation (d) les uns par rapport aux autres et pour commuter le commutateur (25) optique dans l'ordre de la série entre les miroirs (24) après respectivement un $K^{ième}$ de la période d'oscillation (d), avec $K \geq 2$.

10. Dispositif selon l'une des revendications 1 à 9, **caractérisé en ce que** le récepteur laser (14) a un champ de vision (V) qui englobe un angle de balayage ($\theta$) lequel se situerait entre la première et la dernière desdites au moins deux impulsions laser ($S_i$) successives de la séquence si celles-ci n'étaient pas déviées de ladite manière par le dispositif de déviation (10).

11. Dispositif selon l'une des revendications 1 à 10, **caractérisé en ce que** le récepteur laser (14) est mobile pour l'alignement avec les impulsions laser déviées par le dispositif de déviation (10) et réfléchies sur les points de balayage ($P_j$) au moyen d'un servomoteur (21) synchronisé avec le dispositif de déviation (10).

12. Dispositif selon l'une des revendications 1 à 11, **caractérisé en ce que** la ligne de balayage (7) est en forme d'arc et le dispositif de déviation (10) est conçu pour dévier bidimensionnellement le faisceau laser d'émission (4).

**Fig. 1**

**Fig. 2**

**Fig. 3a**

**Fig. 3b**

**Fig. 4**

**Fig. 5**

*Fig. 6a*

*Fig. 6b*

*Fig. 6c*

*Fig. 6d*

*Fig. 6e*

*Fig. 6f*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3182159 B1
- US 20220043149 A1
- US 10067230 B2